# EUROPEAN PATENT SPECIFICATION

(11) **EP 3 766 709 B1**
(45) Date of publication and mention of the grant of the patent: **06.09.2023**
(21) Application number: 19425053.6
(22) Date of filing: 18.07.2019
(51) Int. Cl.: B60C 19/00

(54) **RIM FOR VEHICLE WHEELS COMPRISING A NOISE REDUCING SYSTEM**
FELGE FÜR FAHRZEUGRÄDER MIT RAUSCHMINDERUNGSSYSTEM
JANTE POUR ROUES DE VÉHICULE COMPRENANT UN SYSTÈME DE RÉDUCTION DE BRUIT

(43) Date of publication of application: 20.01.2021
(73) Proprietor: Pirelli Tyre S.p.A., 20126 Milano (IT); Ronal AG, 4624 Härkingen (CH)
(72) Inventor: Azzaretto, Riccardo, 64747 Breuberg (DE); Michel, Thomas, 64747 Breuberg (DE); Böcker, Karl-Heinz, 4624 Härkingen (CH); Schäfer, Felix, 4624 Härkingen (CH)
(74) Representative: Tirloni, Bartolomeo

(56) References cited:
- EP-A2- 0 911 185
- WO-A1-2007/051232

## Description

### Technical field of the invention

The present invention relates to a rim for vehicle wheels comprising a noise reducing system applied to an inner surface of the rim.

### State of the Art

With 'cavity' of a wheel for vehicles it is meant the closed space delimited by the rim and the tire when the tire is mounted on the rim to form the wheel.

With 'inner surface' of a tire it is meant the substantially toroidal surface of the tire defining the cavity.

With 'inner surface' of a rim it is meant the substantially cylindrical surface of the rim defining the cavity.

With 'well' of a rim it is meant the portion of the inner surface of the rim radially innermost in a plane comprising the rotation axis of the rim.

With 'radial' and 'axial' it is meant respectively a direction perpendicular and a direction parallel to a rotation axis of the rim (or equivalently of the tire).

With 'axial plane' it is meant any plane comprising the rotation axis of the rim (or equivalently of the tire).

The terms 'circumferential' and 'circumferentially' are used referring to a direction of the annular development of the rim and/or of the tire around the rotation axis, i.e. the rolling direction of the wheel.

With 'inner circumferential development' of a rim or of a tire it is meant the linear development of the inner surface of the rim or of the tire on a plane perpendicular to the rotation axis and axially central.

With 'substantially parallel' and 'substantially perpendicular' referred to two elements it is meant that an angle between the two elements is respectively 0°+/-15° and 90°+/-15°. With 'noise reducing element' it is meant an element which is able to reduce the noise produced during the tire rolling.

Documents EP1852279B1, EP1510366B1, EP1253025B1, EP2962867A1, EP1184207B1, EP1659004B1, JP62216803B1, WO2007051232A1, EP0911185A2 disclose a noise reducing element applied to an inner surface of a rim for vehicle wheels or to an inner surface of a tire.

EP1253025B1 further discloses that the noise reducing capacity depends on the shape and/or the dimensions of the element itself. The noise reducing element can be in single piece, which develops along most of the inner circumferential development of the rim or of the tire, or it can consist in a plurality of noise reducing sub-elements distributed along a sequence along said inner circumferential development of the rim or of the tire. Said noise reducing element in single piece, or each noise reducing sub-element, consists in a piece of foam material, such as a polymeric foam, for example of substantially trapezoidal and/or parallelepipedal shape. The noise reducing element is glued on the inner surface of the rim or on the inner surface of the tire, typically at the tread band portion.

### Summary of the invention

In the context of passenger cars, the Applicants have noticed the necessity to reduce the cavity noise noticeable by the passenger in the vehicle interior, this noise is perceived as very annoying since the passenger cars are increasingly getting quieter and quieter. Typically, the cavity noise is generated by a resonance vibration of the inflation air between 150 and 250 Hz.

In order to reduce the cavity noise, the Applicants have considered to apply the noise reducing element onto the rim.

However, the Applicants have observed the necessity to prevent that the noise reducing element can be hit by the mechanical tools and/or agents used during the operations of tire mounting/disassembling to/from the rim, and/or of rim movement and/or cleaning, which can lead to damages of the noise reducing element. In fact, the tools and/or agents (such as handlers, levers, detergents, etc) can hit or act on the noise reducing element causing damages of its structure and/or the formation of material debris and/or the (partial or total) detachment of the noise reducing element from the inner surface of the rim. The detachment and/or the damages undergone by the noise reducing element can affect its noise reducing capacity, and, moreover, the material debris can lead to high harmonics disturbances which can result in a louder noise noticeable by the passenger. Therefore, the damaged structure of the noise reducing element could no longer be able to reduce the resonance vibration of the air inside the cavity and the noise noticeable by the passenger in the vehicle interior is unchanged or even enhanced, causing greater annoyance and/or discomfort for the passenger. Furthermore, the presence of material debris into the cavity could lead to a wrong wheel convergence which can cause a faster and not uniform wear of the tire and/or a greater fuel consumption and/or a driving discomfort (e.g. the car tends to go left or right and/or the steering wheel does not return to the initial position after turning and/or the steering wheel is not straight on a rectilinear road) and/or a driving unsafety for the passenger. Moreover, the presence of material debris into the cavity could lead to a tire rotational unbalance causing vehicle vibrations perceivable by the passenger which gives driving discomfort and/or driving unsafety and/or a faster wear of the tire and/or of the mechanical components.

For these and other reasons, the current industrial trend is to apply the noise reducing element to the inner surface of the tyre, rather than on the inner surface of the rim, notwithstanding that similar performances of noise reduction could in principle be achieved. However, the application of the noise reducing element to the rim could lead to additional advantages, such as the avoidance of a temperature build-up of the tyre which may occur in some cases, in particular when the tyre is rolling at high speed. The application of the noise reducing element to the rim may also be advantageous when the inner surface of the tyre is not partially or fully available, e.g. due to the presence of sensors, and/or of sealing layers in so-called self-sealing or self-healing tyres.

The Applicants have thus faced the problem of providing a rim with a noise reducing system able to reduce the cavity noise of a related vehicle wheel and to substantially maintain such capacity over time during use in the vehicle wheel and/or during the operations of tire mounting/disassembling and/or of rim movement and/or cleaning.

According to the Applicants, the above problem is solved by a rim comprising a noise reducing element protected by an air permeable sheath.

According to an aspect, the present invention relates to a rim for vehicle wheels according to claim 1.

With the expression 'air permeable' or 'air permeability' it is meant the ability of a material to allow air to pass through itself.

With the expression 'main portion' referred to a size it is meant more than half of that size.

According to an aspect, the present invention relates to vehicle wheel comprising a rim according to the present invention and a tire mounted onto the rim.

According to the Applicants the presence of a protective sheath covering at least a main portion of a free surface of the noise reducing element (which is the surface of the noise reducing element facing away from the inner surface of the rim and toward the cavity when a tire is mounted onto the rim) allows a mechanical and/or chemical protection of the noise reducing element from the possible mechanical and/or chemical stresses undergone because of the tools and/or agents used during the operations of tire mounting/disassembling and/or rim movement and/or cleaning. In fact, when the mechanical tools and/or the cleaning agents used during the aforesaid operations hit or act on the noise reducing system, the protective sheath offers a mechanical and/or chemical resistance and/or facilitate a slipping of the tip of the tools along its surface, thus relieving the mechanical stresses and/or limiting the possibility of damage of the noise reducing element. Therefore, the presence of the protective sheath improves the duration over time of the noise reducing capacity of the element, because it improves the reliability and/or the durability of the noise reducing element itself.

According to the Applicants the air permeability of the protective sheath (i.e. the capacity of allowing passage of air through the protective sheath itself) allows air exchange between the noise reducing element and the cavity, notwithstanding the fact that the protective sheath covers at least a main portion of the free surface of the noise reducing element. This in turn prevents the collapse of the structure of the noise reducing element, because the pressure balance between the pressure inside the pores/cells of the noise reducing element and the pressure inside the cavity is maintained. According to a possible theory through an optimal air flow resistance and tortuosity (e.g. given by the cell-based structure), the material of which the noise reducing element is made is able to dissipate the energy of the noise wave produced in the cavity, enhancing the noise reducing capacity of the element. This effect could be attributed to the hysteresis of the material of which the noise reducing element is made. Therefore, the noise reducing element does not (substantially) lose its dimensional features over time, and it is able to maintain noise reducing capacity even after a long time period.

Therefore, the protective sheath of the present invention provides, at the same time, a protection of the noise reducing element without impairing its noise reducing capacity.

The present invention in one or more of the aforesaid aspects can have one or more of the following preferred features.

Preferably said noise reducing system is fixed to a rim well of said rim. In this way, the noise reducing system remains further mechanically protected.

Preferably said protective sheath is adjacent to, more preferably in contact with, said free surface of the noise reducing element. In this way, the protective sheath can exert the desired protective properties and air permeability while keeping limited the overall encumbrance.

Preferably said protective sheath covers at least 85% of, more preferably at least 90% of, even more preferably all said free surface of said noise reducing element. In this way the protective sheath is able to effectively protect the noise reducing element, while the air permeability of the protective sheath allows the air to pass through the sheath.

Preferably the protective sheath has a thickness greater than or equal to 0.01 mm, more preferably greater than or equal to 0,05 mm, even more preferably greater than or equal to 0,1 mm, and less than or equal to 1 mm, more preferably less than or equal to 0,5 mm. The above thickness, depending on the specific material/structure of the sheath used, allows the protective capacity of the sheath while keeping limited the encumbrance and/or the weight of the overall system.

Preferably said rim comprises an adhesive layer (e.g. a pressure sensitive adhesive) interposed between said noise reducing element and said inner surface, for fixing said noise reducing element to said rim. In this way the noise reducing element is securely and firmly fixed to the inner surface of the rim. In fact, the noise reducing element (and the related system) is subjected to centrifugal forces developing during rotation of the rim at high speed, which can cause a detachment and/or a partial separation of the noise reducing element from the inner surface of the rim.

Preferably said protective sheath is impermeable to chemical substances (e.g. oil, grease). In this way the noise reducing element is protected by the inevitable presence of chemical substances, which can impair the noise reducing capacity of the element if it comes into contact with said chemical substances.

Preferably said protective sheath is breathable, preferably in one and only one direction, more preferably said direction is oriented from inside to outside the noise reducing element.

With the expression "breathable" or "breathability" it is meant the ability of a material to allow moisture vapour to be transmitted through itself.

In this way moisture vapour possibly entrapped in the noise reducing element is allowed to be evacuated through the protective sheath, while preventing the passage towards the inside of the noise reducing element of further moisture vapour.

Preferably said protective sheath is made of a thermoplastic material, for example selected in the group consisting of: polyamide (PA), textile polyamide, thermoplastic polyurethane (TPU), polyurethane (PU), expanded microperforated polytetrafluoroethylene (PTFE) such as GORE-TEX^{™}. In this way the desired mechanical and/or chemical resistance capacity of the protective sheath is achieved. In addition, most of these materials are highly air permeable, and possibly breathable.

Otherwise these materials can be made air permeable, and possibly breathable, through an additional process.

Preferably the protective sheath has an air permeability greater than or equal to 1,7 I m-²s⁻¹ more preferably greater than or equal to 2 I m⁻²s⁻¹, according to ISO 9237 test method.

In one embodiment, for example in case of protective sheath made of TPU (which is typically not air permeable), the protective sheath is densely perforated (in order to make the sheath air permeable).

Preferably said protective sheath is a coating layer sprayed (substantially) on whole said surface of the noise reducing element (i.e. both the free surface and the face facing the rim). In this way, the protective sheath is securely and firmly fixed to said inner surface of the rim.

Preferably said protective sheath is made of PU.

Preferably said noise reducing element has a (maximum) axial width greater than or equal to 25 mm, more preferably greater than or equal to 40 mm, and less than or equal to 250 mm, more preferably less than or equal to 150 mm.

Preferably said noise reducing element has a radial height greater than or equal to 5 mm, more preferably greater than or equal to 10 mm, even more preferably greater than or equal to 20 mm, and less than or equal to 80 mm, more preferably less than or equal to 60 mm, even more preferably less than or equal to 40 mm.

In this way the noise reducing element has the appropriate dimensions for noise reduction, while maintaining still limited the encumbrance, diminishing the possibility that the system can be mechanically hit.

Preferably said noise reducing element has a section in an axial plane having a substantially trapezoidal shape. In this way the aforesaid operations are easier, because the inclined lateral sides of the noise reducing element diminish the possibility of the system to be damaged (e.g. broken or punctured) during said operations.

Preferably said noise reducing element has a minimum axial width (e.g. at the top of the trapezoid) greater than or equal to 15 mm, more preferably greater than or equal to 20 mm, and less than or equal to 100 mm, more preferably less than or equal to 80 mm.

Preferably said trapezoidal shape has an angle formed between a side facing toward the inner surface of the rim and an adjacent side greater than or equal to 10°, more preferably greater than or equal to 15°, even more preferably greater than or equal to 30°, and less than 90°, more preferably less than or equal to 75°, even more preferably less than or equal to 60°. In this way the operations of tire mounting/disassembling and/or of rim movement and/or cleaning are further simplified because it is further reduced the risk of impacts with the tools used in these operations. In alternative embodiments, said noise reducing element has a section in an axial plane having a curved (e.g. substantially semi-circular) or rectangular shape.

Preferably a volume of said noise reducing element is greater than or equal to 5%, more preferably greater than or equal to 8%, and/or less than or equal to 30%, more preferably less than or equal to 20%, of a volume of a cavity (when empty, i.e. without the noise reducing system). In this way the volume of the noise reducing element is optimized, maintaining its noise reducing capacity with a limited encumbrance and/or having a low material consumption.

Preferably said noise reducing element is in single piece (i.e. the noise reducing element develops with structural continuity along the circumferential development of the inner surface of the rim). In this way the manufacturing and/or fixing of the element is simplified.

In another embodiment, said noise reducing element is formed of distinct sub-elements. In this embodiment, said sub-elements are fixed in sequence along said circumferential development of said inner surface of said rim, more preferably they are spaced between each other, even more preferably they are (substantially) equidistant between each other. In this way the application of the noise reducing element to the inner surface of the rim is facilitated, for example through automated procedures.

In this embodiment, said sub-elements are distributed, more preferably in a (substantially) regular way, along (substantially) all said circumferential development of said inner surface of the rim. In this way the noise reducing capacity of the element is circumferentially uniform, limiting a non-uniform reduction of the cavity noise.

In this embodiment, said sub-elements have a width in an axial direction (substantially) equal between each other (said width being typically determined as a function of the axial with of the rim). In this way all the individual pads, which form the noise reducing element, effectively and uniformly exert their noise reducing capacity.

In this embodiment, said sub-elements are in number greater than or equal to three, more preferably greater than or equal to five, and/or less than or equal to fifteen, more preferably less than or equal to twelve. In this way it is possible to uniformly cover, as much as possible, the circumferential development of the inner surface of the rim.

Preferably said noise reducing element (in single piece or in a plurality of sub-elements) develops along at least 70%, more preferably at least 80%, still more preferably at least 90% of said circumferential development of the inner surface of the rim. In this way it is achieved a higher noise reducing capacity of the element.

Preferably, said protective sheath may be in single piece (e.g. covering said noise reducing element in single piece or covering a plurality of sub-elements) or may comprise a distinct protective sub-sheath for each sub-element.

In an embodiment, said noise reducing element is formed by circumferentially developing strips fixed side by side to said inner surface of said rim. In this way the dimension of the noise reducing element can be further optimized, limiting the material consumption.

In this embodiment, said strips are distinct strips wrapped mutually parallel along said circumferential development of said inner surface of the rim. Alternatively, said strips are formed by a single elongated element wrapped on the inner surface of the rim in axially contiguous or partially overlapping circumferential coils.

Preferably said noise reducing element is able to reduce a noise at a frequency greater than or equal to 150 Hz, more preferably greater than or equal to 170 Hz, and less than or equal to 290 Hz, more preferably less than or equal to 270 Hz. In this way the critical frequency range of the cavity noise is damped by the element.

Preferably said noise reducing element is made of a soundproofing material preferably chosen in the following group of materials: foamed plastic, foamed rubber, polymeric foam, natural foam, non-woven fibres, mineral wool and/or glass wool, more preferably made of melamine foam, ethylene-propylene rubber sponge (EPDM), nitrile-butadiene rubber (NBR), melamine foam or polyurethane foam. In this way it is obtained high noise reducing capacity of the element.

Preferably said noise reducing element is made of an open-cell material. In this way the material has an optimal noise reducing capacity, because also the inner cells of the material contribute to noise reduction.

Preferably said noise reducing element is made of an open-cell material with a global density greater than or equal to 6 kg/m³, more preferably greater than or equal to 7 kg/m³, and less than or equal to 50 kg/m³, more preferably less than or equal to 25 kg/m³. The Applicants have observed that this density range ensures an optimal balance between the noise reducing capacity of the noise reducing element and the quantity of used material in order not to impair the tire rotational balance.

### Brief description of the drawings

Figure 1 schematically shows a partial view of a section on an axial plane of a vehicle wheel comprising a rim according to an embodiment of the present invention;
Figure 2 schematically shows a partial view of a section on an axial plane of a rim comprising a noise reducing system according to one embodiment of the present invention;
Figures 3 and 4 schematically show partial views of a section on an axial plane of a wheel comprising a rim with a noise reducing system respectively according to further embodiments of the present invention;

### Detailed description of some embodiments of the invention

The features and advantages of the present invention will be further clarified by the following detailed description of some embodiments, presented by way of example and not of limitation of the present invention, with reference to the attached figures. The same reference number will be used for the same element in the various embodiments, possibly in the different variants of said element.

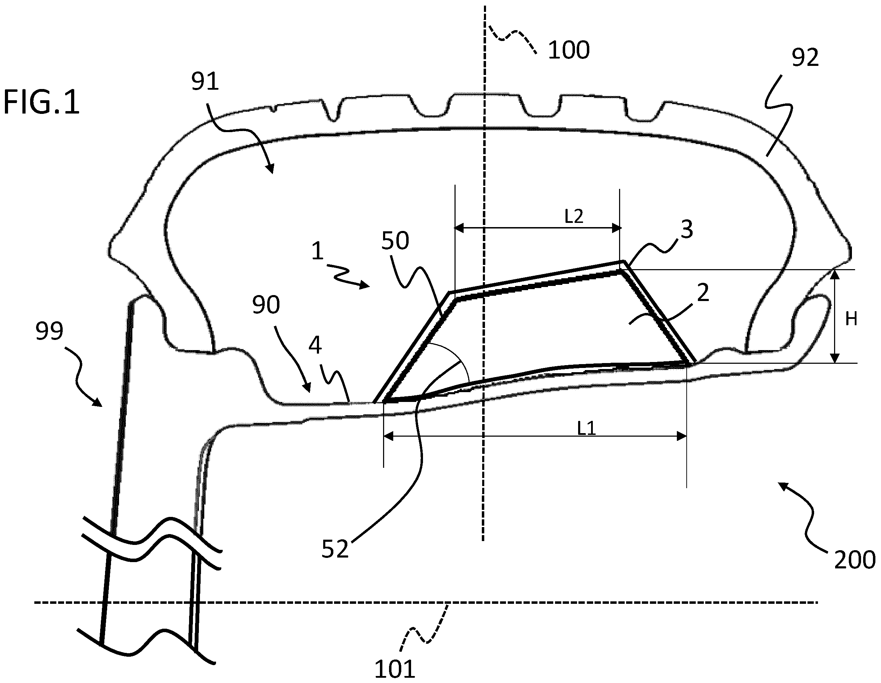

With reference to figure 1, it shows in axial section a vehicle wheel 200 comprising a rim 99 to which a tire 92 is mounted.

The rim 99 comprises a noise reducing system 1 fixed to an inner surface 4 of the rim 99.

The noise reducing system 1 comprises a noise reducing element 2 and a protective sheath 3 covering at least a main portion of a free surface 50 of the noise reducing element 2. By "free surface" 50 it is meant the surface of the element 2 left free by the inner surface 4 of the rim 99, i.e. the surface facing toward the cavity 91.

The noise reducing element 2 develops (not shown) along a main portion of a circumferential development of the inner surface 4 of the rim 99 in order to effectively suppress noise.

Preferably the protective sheath 3 is air permeable.

Preferably the protective sheath 3 is breathable solely in the direction from inside to outside of the element.

Exemplarily the noise reducing system 1 is fixed to a rim well 90 of the rim 99.

Exemplarily the protective sheath 3 is in close contact with the free surface 50 of the noise reducing element 2.

Exemplarily the protective sheath 3 covers all the free surface 50 of the noise reducing element, i.e. it develops along the axial and circumferential directions at least as much as the free surface 50.

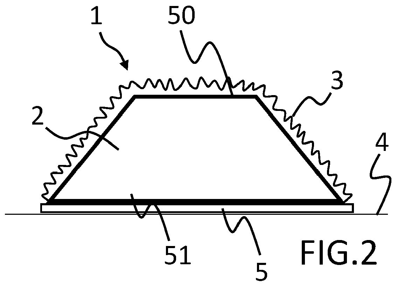

With reference to figure2, the rim 99 typically (but not necessarily) comprises an adhesive layer 5 (not shown in figures 1 and 3-4), exemplarily made of a reactive hotmelt or an acrylic pressure sensitive adhesive (e.g. the adhesives 3M^{™} 9469, 3M^{™} 468, 3M^{™} 93430, 3M^{™} 9485 PC or Nitto 5925), interposed between the noise reducing element 2 and the inner surface 4, for fixing the noise reducing element 2 to the rim.

The protective sheath 3 is a coating layer sprayed on the free surface 50, optionally (not illustrated) on the whole surface, of the noise reducing element 2. In the embodiment shown in figure 2, the protective sheath 3 is made of PU and has a thickness of 0,1 mm. Exemplarily (as shown in figures 1 and 2) the noise reducing element 3 has a section in an axial plane having a trapezoidal shape.

Exemplarily the trapezoidal shape has an angle 52 formed between a side 51 facing toward the inner surface 4 of the rim 99 and the adjacent side in the outer position of the wheel of about 45°.

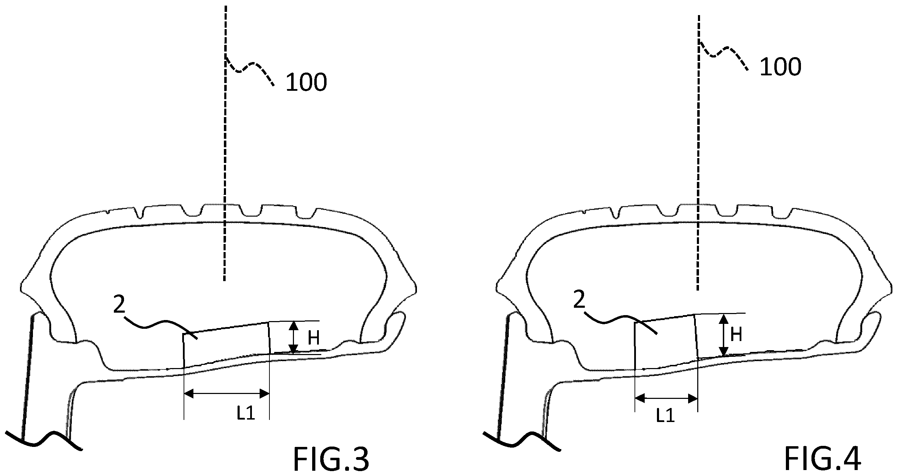

In the embodiments shown in figures 3-4, the noise reducing element has a section in an axial plane having a rectangular shape.

In alternative embodiments not shown, the noise reducing element has a section in an axial plane having a semi-circular shape.

Exemplarily the noise reducing element 2 is made of an open-cell material.

Exemplarily the noise reducing element 2 is made of an open-cell material with a global density of about 9 kg/m³.

Exemplarily the noise reducing element 2 is made of melamine foam (e.g. Basotect^{™} traded by BASF^{™}).

Exemplarily the noise reducing element 2 is made of polyester (PES) - polyurethane (PU) open cells foam, with a global density of 20 kg/m³.

Exemplarily the noise reducing element develops (not shown) along about 90% of the circumferential development of the inner surface of the rim.

Exemplarily the noise reducing element 2 is in single piece, i.e. it develops with structural continuity along its circumferential direction.

Alternatively, the noise reducing element 2 can be formed of distinct sub-elements circumferentially spaced apart one from the other.

In an embodiment (not shown), the sub elements are, exemplarily, fixed substantially equidistant one from the other along the circumferential development of the inner surface of the rim and they are distributed in a regular way along all the circumferential development. Exemplarily, the sub-elements may be between five and eight.

In one embodiment, the noise reducing element may be formed by circumferentially developing strips fixed side by side to the inner surface of the rim.

## Claims

1. Rim (99) for vehicle wheels (200) comprising a noise reducing system (1) fixed to an inner surface (4) of said rim (99), wherein said noise reducing system (1) comprises:
- a noise reducing element (2) developing along a main portion of a circumferential development of the inner surface (4) of said rim (99), and
- a protective sheath (3) covering at least a main portion of a free surface (50) of said noise reducing element (2), said free surface (50) being left free by said inner surface (4) of the rim (99), wherein said protective sheath (3) is air permeable,
**characterized in that** said protective sheath (3) is a coating layer sprayed substantially on a surface of said noise reducing element (2) and **in that** said protective sheath (3) is made of a rubber material and/or a foamed material.

2. Rim (99) according to claim 1, wherein said protective sheath (3) is adjacent to, and in contact with, said free surface (50) of the noise reducing element (2), wherein said protective sheath (3) covers at least 85% of said free surface (50) of said noise reducing element (2), and wherein the protective sheath (3) has a thickness greater than or equal to 0.01 mm and less than or equal to 1 mm.

3. Rim (99) according to anyone of the previous claims, wherein said protective sheath (3) is breathable in one and only one direction, said direction being oriented from inside to outside the noise reducing element (2).

4. Rim (99) according to anyone of the previous claims, wherein said protective sheath (3) is made of a thermoplastic material selected in the group consisting of: polyamide (PA), textile polyamide, thermoplastic polyurethane (TPU), polyurethane (PU), expanded microperforated polytetrafluoroethylene (PTFE) such as GORE-TEX^{™}, wherein said protective sheath (3) is impermeable to oil and grease and wherein said protective sheath (3) has an air permeability greater than or equal to 1,7 I m⁻²s⁻¹.

5. Rim (99) according to anyone of the previous claims, wherein said protective sheath (3) is a coating layer sprayed substantially both on the free surface and on a face of the noise reducing element (2) facing the rim.

6. Rim (99) according to anyone of the previous claims wherein said protective sheath (3) is made of PU.

7. Rim (99) according to anyone of the previous claims, wherein said noise reducing element (2) has an axial width (L1) greater than or equal to 25 mm, and less than or equal to 250 mm, and wherein said noise reducing element (2) has a radial height (H) greater than or equal to 5 mm and less than or equal to 80 mm.

8. Rim (99) according to anyone of the previous claims, wherein said noise reducing element (2) has a section in an axial plane having a substantially trapezoidal shape, wherein said noise reducing element (2) has a minimum axial width (L2) greater than or equal to 15 mm, and less than or equal to 100 mm, and wherein said trapezoidal shape has an angle (52) formed between a side facing toward the inner surface (4) of the rim (99) and an adjacent side greater than or equal to 10° and less than 90°.

9. Rim (99) according to anyone of the previous claims, wherein said noise reducing element (2) develops along at least 70% of said circumferential development of the inner surface (4) of the rim (99), wherein said noise reducing element (2) is made of a soundproofing material chosen in the following group of materials: foamed plastic, foamed rubber, polymeric foam, natural foam, non-woven fibres, mineral wool and/or glass wool, melamine foam, ethylene-propylene rubber sponge (EPDM), nitrile-butadiene rubber (NBR), or polyurethane foam, and wherein said noise reducing element is made of an open-cell material with a global density greater than or equal to 6 kg/m³ and less than or equal to 50 kg/m³.

10. Rim (99) according to anyone of the previous claims, wherein said noise reducing element (2) and said protective sheath (3) are in single piece.

11. Rim (99) according to anyone of the claims from 1 to 9, wherein said noise reducing element (2) is formed of distinct sub-elements, wherein said sub-elements are fixed in sequence along said circumferential development of said inner surface (4) of said rim (99), wherein said sub-elements are distributed along substantially all said circumferential development of said inner surface (4) of the rim (99), wherein said sub-elements have a width in an axial direction substantially equal between each other, and wherein said sub-elements are in number greater than or equal to three and/or less than or equal to fifteen.

12. Rim (99) according to claim 11, wherein said protective sheath (3) comprises a distinct protective sub-sheath for each sub-element.

13. Rim (99) according to anyone of the claims 1 to 9, wherein said noise reducing element (2) is formed by circumferentially developing strips fixed side by side to said inner surface (4) of said rim (99), wherein said strips are distinct strips wrapped mutually parallel along said circumferential development of said inner surface (4) of the rim (99), or wherein said strips are formed by a single elongated element wrapped on the inner surface (4) of the rim (99) in axially contiguous or partially overlapping circumferential coils.

14. Rim (99) according to anyone of the previous claims, wherein said noise reducing system (1) is fixed to a rim well (90) of said rim (99) and wherein said rim (99) comprises an adhesive layer (5) interposed between said noise reducing element (2) and said inner surface (4), for fixing said noise reducing element (2) to said rim (99).

15. Vehicle wheel (200) comprising a rim (99) according to anyone of the previous claims, wherein a volume of said noise reducing element (2) is greater than or equal to 5% and less than or equal to 30% of a volume of a cavity (91) of the wheel (200).

## Patentansprüche

1. Felge (99) für Fahrzeugräder (200), die ein geräuschverringerndes System (1) umfasst, das an einer inneren Oberfläche (4) der Felge (99) befestigt ist, wobei das geräuschverringernde System (1) umfasst:
- ein geräuschverringerndes Element (2), das sich entlang eines Hauptabschnitts einer Umfangserstreckung der inneren Oberfläche (4) der Felge (99) erstreckt, und
- eine Schutzhülle (3), die mindestens einen Hauptabschnitt einer freien Oberfläche (50) des geräuschverringernden Elements (2) bedeckt, wobei die freie Oberfläche (50) durch die innere Oberfläche (4) der Felge (99) frei gelassen wird, wobei die Schutzhülle (3) luftdurchlässig ist,
**dadurch gekennzeichnet, dass** die Schutzhülle (3) eine im Wesentlichen auf eine Oberfläche des geräuschverringernden Elements (2) aufgesprühte Beschichtungsschicht ist und dass die Schutzhülle (3) aus einem Gummimaterial und/oder einem geschäumten Material hergestellt ist.

2. Felge (99) nach Anspruch 1, wobei die Schutzhülle (3) zu der freien Oberfläche (50) des geräuschverringernden Elements (2) benachbart ist und mit dieser in Kontakt steht, wobei die Schutzhülle (3) mindestens 85 % der freien Oberfläche (50) des geräuschverringernden Elements (2) bedeckt und wobei die Schutzhülle (3) eine Dicke von mehr als oder gleich 0,01 mm und weniger als oder gleich 1 mm aufweist.

3. Felge (99) nach einem der vorhergehenden Ansprüche, wobei die Schutzhülle (3) in einer und nur einer Richtung gasdurchlässig ist, wobei diese Richtung von der Innenseite des geräuschverringernden Elements (2) nach außen gerichtet ist.

4. Felge (99) nach einem der vorhergehenden Ansprüche, wobei die Schutzhülle (3) aus einem thermoplastischen Material hergestellt ist, das aus der Gruppe ausgewählt ist, die besteht aus: Polyamid (PA), Textilpolyamid, thermoplastisches Polyurethan (TPU), Polyurethan (PU), expandiertes mikroperforiertes Polytetrafluorethylen (PTFE) wie GORE-TEX^{™}, wobei die Schutzhülle (3) undurchlässig für Öl und Fett ist und wobei die Schutzhülle (3) eine Luftdurchlässigkeit von mehr als oder gleich 1,7 I m⁻²s⁻¹aufweist.

5. Felge (99) nach einem der vorhergehenden Ansprüche, wobei die Schutzhülle (3) eine Beschichtungsschicht ist, die im Wesentlichen sowohl auf die freie Oberfläche als auch auf eine der Felge zugewandte Fläche des geräuschverringernden Elements (2) aufgesprüht ist.

6. Felge (99) nach einem der vorhergehenden Ansprüche, wobei die Schutzhülle (3) aus PU hergestellt ist.

7. Felge (99) nach einem der vorhergehenden Ansprüche, wobei das geräuschverringernde Element (2) eine axiale Breite (L1) größer oder gleich 25 mm und kleiner oder gleich 250 mm aufweist und wobei das geräuschverringernde Element (2) eine radiale Höhe (H) größer oder gleich 5 mm und kleiner oder gleich 80 mm aufweist.

8. Felge (99) nach einem der vorhergehenden Ansprüche, wobei das geräuschverringernde Element (2) einen Querschnitt in einer axialen Ebene mit einer im Wesentlichen trapezförmigen Form aufweist, wobei das geräuschverringernde Element (2) eine minimale axiale Breite (L2) von mehr als oder gleich 15 mm und weniger als oder gleich 100 mm aufweist, und wobei die trapezförmige Form einen Winkel (52) aufweist, der zwischen einer Seite, die der inneren Oberfläche (4) der Felge (99) zugewandt ist, und einer benachbarten Seite gebildet wird, der größer oder gleich 10° und kleiner als 90° ist°.

9. Felge (99) nach einem der vorhergehenden Ansprüche, wobei sich das geräuschverringernde Element (2) entlang mindestens 70 % der Umfangserstreckung der inneren Oberfläche (4) der Felge (99) erstreckt, wobei das geräuschverringernde Element (2) aus einem schalldämpfenden Material hergestellt ist, das aus der folgenden Gruppe von Materialien ausgewählt ist: Schaumstoff, Schaumgummi, Polymerschaum, Naturschaum, Faservlies, Mineralwolle und/oder Glaswolle, Melaminschaum, Ethylen-Propylen-Kautschuk-Schwamm (EPDM), Nitril-Butadien-Kautschuk (NBR) oder Polyurethanschaum, und wobei das geräuschverringernde Element aus einem offenzelligen Material mit einer Gesamtdichte von mehr als oder gleich 6 kg/m³ und weniger als oder gleich 50 kg/m³hergestellt ist.

10. Felge (99) nach einem der vorhergehenden Ansprüche, wobei das geräuschverringernde Element (2) und die Schutzhülle (3) aus einem einzigen Stück bestehen.

11. Felge (99) nach einem der Ansprüche 1 bis 9, wobei das geräuschverringernde Element (2) aus unterschiedlichen Teilelementen gebildet ist, wobei die Teilelemente in einer Reihenfolge entlang der Umfangserstreckung der inneren Oberfläche (4) der Felge (99) befestigt sind, wobei die Teilelemente entlang im Wesentlichen der gesamten Umfangserstreckung der inneren Oberfläche (4) der Felge (99) verteilt sind, wobei die Teilelemente eine Breite in einer axialen Richtung haben, die im Wesentlichen untereinander gleich ist, und wobei die Anzahl der Teilelemente größer oder gleich drei und/oder kleiner oder gleich fünfzehn ist.

12. Felge (99) nach Anspruch 11, wobei die Schutzhülle (3) für jedes Teilelement eine eigene Teil-Schutzhülle umfasst.

13. Felge (99) nach einem der Ansprüche 1 bis 9, wobei das geräuschverringernde Element (2) durch sich in Umfangsrichtung erstreckende Streifen gebildet ist, die Seite an Seite an der inneren Oberfläche (4) der Felge (99) befestigt sind, wobei die Streifen unterschiedliche Streifen sind, die parallel zueinander entlang der Umfangserstreckung der inneren Oberfläche (4) der Felge (99) gewickelt sind, oder wobei die Streifen durch ein einzelnes längliches Element gebildet sind, das auf der inneren Oberfläche (4) der Felge (99) in axial aneinandergrenzenden oder teilweise überlappenden Umfangswicklungen gewickelt ist.

14. Felge (99) nach einem der vorhergehenden Ansprüche, wobei das geräuschverringernde System (1) an einem Felgenbett (90) der Felge (99) befestigt ist und wobei die Felge (99) eine Klebeschicht (5) umfasst, die zwischen dem geräuschverringernden Element (2) und der inneren Oberfläche (4) angeordnet ist, um das geräuschverringernde Element (2) an der Felge (99) zu befestigen.

15. Fahrzeugrad (200), umfassend eine Felge (99) nach einem der vorhergehenden Ansprüche, wobei das Volumen des geräuschverringernden Elements (2) größer oder gleich 5 % und kleiner oder gleich 30 % des Volumens eines Hohlraums (91) des Rads (200) beträgt.

## Revendications

1. Jante (99) pour roues de véhicule (200) comprenant un système de réduction de bruit (1) fixé à une surface interne (4) de ladite jante (99), dans laquelle ledit système de réduction de bruit (1) comprend :
- un élément de réduction de bruit (2) se développant le long d'une partie principale d'un développement circonférentiel de la surface interne (4) de ladite jante (99), et
- une gaine de protection (3) couvrant au moins une partie principale d'une surface libre (50) dudit élément de réduction de bruit (2), ladite surface libre (50) étant laissée libre par ladite surface interne (4) de la jante (99), dans laquelle ladite gaine de protection (3) est perméable à l'air,
**caractérisée en ce que** ladite gaine de protection (3) est une couche de revêtement pulvérisée sensiblement sur une surface dudit élément de réduction de bruit (2) et **en ce que** ladite gaine de protection (3) est réalisée en un matériau en caoutchouc et/ou un matériau en mousse.

2. Jante (99) selon la revendication 1, dans laquelle ladite gaine de protection (3) est adjacente à, et en contact avec, ladite surface libre (50) de l'élément de réduction de bruit (2), dans laquelle ladite gaine de protection (3) couvre au moins 85% de ladite surface libre (50) dudit élément de réduction de bruit (2), et dans laquelle la gaine de protection (3) a une épaisseur supérieure ou égale à 0,01 mm et inférieure ou égale à 1 mm.

3. Jante (99) selon l'une quelconque des revendications précédentes, dans laquelle ladite gaine de protection (3) est respirante dans une et une seule direction, ladite direction étant orientée de l'intérieur à l'extérieur de l'élément de réduction de bruit (2).

4. Jante (99) selon l'une quelconque des revendications précédentes, dans laquelle ladite gaine de protection (3) est réalisée en un matériau thermoplastique choisi dans le groupe constitué par : le polyamide (PA), le polyamide textile, le polyuréthane thermoplastique (TPU), le polyuréthane (PU), le polytétrafluoroéthylène (PTFE) microperforé expansé tel que GORE-TEX^{™}, dans laquelle ladite gaine de protection (3) est imperméable à l'huile et à la graisse et dans laquelle ladite gaine de protection (3) a une perméabilité à l'air supérieure ou égale à 1,7 I m⁻²s⁻¹.

5. Jante (99) selon l'une quelconque des revendications précédentes, dans laquelle ladite gaine de protection (3) est une couche de revêtement pulvérisée sensiblement à la fois sur la surface libre et sur une face de l'élément de réduction de bruit (2) faisant face à la jante.

6. Jante (99) selon l'une quelconque des revendications précédentes dans laquelle ladite gaine de protection (3) est réalisée en PU.

7. Jante (99) selon l'une quelconque des revendications précédentes, dans laquelle ledit élément de réduction de bruit (2) a une largeur axiale (L1) supérieure ou égale à 25 mm, et inférieure ou égale à 250 mm, et dans laquelle ledit élément de réduction de bruit (2) a une hauteur radiale (H) supérieure ou égale à 5 mm et inférieure ou égale à 80 mm.

8. Jante (99) selon l'une quelconque des revendications précédentes, dans laquelle ledit élément de réduction de bruit (2) a une section dans un plan axial ayant une forme sensiblement trapézoïdale, dans laquelle ledit élément de réduction de bruit (2) a une largeur axiale minimale (L2) supérieure ou égale à 15 mm, et inférieure ou égale à 100 mm, et dans laquelle ladite forme trapézoïdale présente un angle (52) formé entre un côté tourné vers la surface interne (4) de la jante (99) et un côté adjacent supérieur ou égal à 10° et inférieur à 90°.

9. Jante (99) selon l'une quelconque des revendications précédentes, dans laquelle ledit élément de réduction de bruit (2) se développe le long d'au moins 70% dudit développement circonférentiel de la surface interne (4) de la jante (99), dans laquelle ledit élément de réduction de bruit (2) est réalisé en un matériau insonorisant choisi dans le groupe de matériaux suivant : une mousse plastique, du caoutchouc mousse, une mousse polymère, une mousse naturelle, des fibres non tissées, une laine minérale et/ou une laine de verre, une mousse de mélamine, une mousse de caoutchouc éthylène-propylène (EPDM), du caoutchouc nitrile-butadiène (NBR), ou une mousse de polyuréthane, et dans laquelle ledit élément de réduction de bruit est réalisé en un matériau à alvéoles ouvertes ayant une masse volumique globale supérieure ou égale à 6 kg/m³ et inférieure ou égale à 50 kg/m³.

10. Jante (99) selon l'une quelconque des revendications précédentes, dans laquelle ledit élément de réduction de bruit (2) et ladite gaine de protection (3) sont réalisés en une seule pièce.

11. Jante (99) selon l'une quelconque des revendications 1 à 9, dans laquelle ledit élément de réduction de bruit (2) est formé de sous-éléments distincts, dans laquelle lesdits sous-éléments sont fixés en séquence le long dudit développement circonférentiel de ladite surface interne (4) de ladite jante (99), dans laquelle lesdits sous-éléments sont répartis le long sensiblement de tout ledit développement circonférentiel de ladite surface interne (4) de la jante (99), dans laquelle lesdits sous-éléments ont une largeur dans une direction axiale sensiblement égale entre eux, et dans laquelle lesdits sous-éléments sont en nombre supérieur ou égal à trois et/ou inférieur ou égal à quinze.

12. Jante (99) selon la revendication 11, dans laquelle ladite gaine de protection (3) comprend une sous-gaine de protection distincte pour chaque sous-élément.

13. Jante (99) selon l'une quelconque des revendications 1 à 9, dans laquelle ledit élément de réduction de bruit (2) est formé par des bandes en développement circonférentiel fixées côte à côte à ladite surface interne (4) de ladite jante (99), dans laquelle lesdites bandes sont des bandes distinctes enroulées mutuellement parallèlement le long dudit développement circonférentiel de ladite surface interne (4) de la jante (99), ou dans laquelle lesdites bandes sont formées par un seul élément allongé enroulé sur la surface interne (4) de la jante (99) en bobines circonférentielles axialement contiguës ou se chevauchant partiellement.

14. Jante (99) selon l'une quelconque des revendications précédentes, dans laquelle ledit système de réduction de bruit (1) est fixé à une base de jante (90) de ladite jante (99) et dans laquelle ladite jante (99) comprend une couche adhésive (5) interposée entre ledit élément de réduction de bruit (2) et ladite surface interne (4), pour fixer ledit élément de réduction de bruit (2) à ladite jante (99).

15. Roue de véhicule (200) comprenant une jante (99) selon l'une quelconque des revendications précédentes, dans laquelle un volume dudit élément de réduction de bruit (2) est supérieur ou égal à 5% et inférieur ou égal à 30% d'un volume d'une cavité (91) de la roue (200).
